(19) Europäisches Patentamt
European Patent Office
Office européen des brevets

(11) Publication number: **0 124 664 B1**

(12) **EUROPEAN PATENT SPECIFICATION**

(45) Date of publication of patent specification: **09.12.87**

(21) Application number: **83302517.4**

(22) Date of filing: **04.05.83**

(51) Int. Cl.[4]: **B 29 D 23/00,** C 08 K 5/13, C 08 K 5/34, C 08 K 5/37, C 08 K 5/53

(54) **Poly-1-butene resin composition and water pipe manufactured therefrom.**

(43) Date of publication of application:
**14.11.84 Bulletin 84/46**

(45) Publication of the grant of the patent:
**09.12.87 Bulletin 87/50**

(84) Designated Contracting States:
**DE GB NL**

(58) References cited:
**GB-A-1 331 353**
**US-A-3 349 059**
**US-A-3 440 212**
**US-A-3 531 483**
**US-A-3 823 115**
**US-A-3 856 726**
**US-A-4 077 902**

**CHEMICAL ABSTRACTS, vol. 95, no. 9, 31st August 1981, page 594, no. 78629t, Columbus, Ohio, USA, UNITED STATES FOOD AND DRUG ADMINISTRATION: "Indirect food additives: adjuvants, production aids, and sanitizers; antioxidants and/or stabilizers for polymers; tetrakis(methylene(3,5-di-tert-butyl-4-hydroxyhydrocinnamate))methane"**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Hashimoto, Takashi**
**4-13, Waki 5-chome Waki-machi**
**Kuga-gun Yamaguchi-ken (JP)**
Inventor: **Igarashi, Chikara**
**13-7, Minamisakae 2-chome**
**Ohtake-shi Hiroshima-ken (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 124 664 B1

**Description**

This invention relates to a poly-1-butene resin composition and to pipes containing it. More specifically, it relates to a poly-1-butene resin composition having excellent resistance and pressure-resistant strength against cold or hot water having sterilizing chlorine dissolved therein.

Metallic pipes such as zinc-placed steel pipes, copper pipes and lead pipes have heretofore been used as pipes for supplying cold or hot water. The steel pipes have the defect that rust is formed to generate red or black water. The copper pipes have the defect that pin holes are generated owing to electrolytic corrosion, or blue water occurs as a result of rust formation. Hence, new piping materials have been desired. To some extent, plastic pipes such as pipes made of polyvinyl chloride, polyethylene and poly-1-butene which do not develop rust or pinholes owing to electrolytic corrosion have already come into practical use. In particular, poly-1-butene is now elaluated as one of the most suitable resins for water supply pipes because of its excellent pressure-resistant strength, internal pressure creep durability at high temperatures, high and low temperature properties, abrasion resistance, and flexibility.

Like other synthetic resins, poly-1-butene also undergoes chemical degradation under the action of sterilizing chlorine added to city water, and tends to lose its inherent high performance. This tendency becomes especially pronounced in hot water supply pipes which are placed under high-temperature and high-pressure loads.

To the best of the knowledges of the present inventors, there has not been known a poly-1-butene resin composition having excellent resistance (to be referred to as chlorine water resistance) to cold or hot water containing sterilizing chlorine dissolved therein (to be referred to as chlorine water) and excellent pressure-resistant strength.

US—A—3,440,212 describes a poly-α-olefin composition which contains a stabilizer which may be 4,4'-thiobis (6-t-butyl-m-cresol). These compositions are said to exhibit improved thermal degradation.

Chemical Abstracts 95:78629t, which is an abstract of Fed. Regist. 7 July 1981 46(129), 35087—8, describes a poly-1-butene composition which contains tetrakis(methylene(3,5-di-tert-butyl-4-hydroxyhydrocinnamate)) methane as an antioxidant/stabilizer. This composition is suitable for contact with food.

Neither of the above documents indicates that similar compositions could have improved chlorine resistance.

This invention provides a poly-1-butene resin composition and pipes made therefrom having excellent chlorine water resistance. The pipes of the invention have excellent pressure resistance when in contact with chlorine water (referred to simply as pressure resistance). They have excellent surface luster and show only a small reduction in the degree of polymerization of the poly-1-butene polymer when kept in contact with chlorine water for a long period of time.

The invention provides a cold or hot water pipe comprising a resin composition comprising a poly-1-butene polymer and at least one hindered phenol selected from

(a) 3,5-di-tert-butyl-4-hydroxybenzoates of the following formula

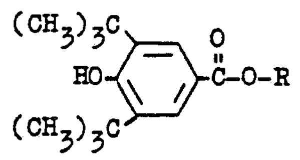

wherein R represents an alkyl group having 1 to 18 carbon atoms or an aryl group having 6 to 18 carbon atoms,

(b) 1,3,5-trimethyl-2,4,6-tris(3,5-di-tert-butyl-4-hydroxybenzyl)benzene,

(c) 1,3,5-tris(4-tert-butyl-3-hydroxy-2,6-dimethylbenzyl)isocyanurate,

(d) tris(3,5-di-tert-butyl-4-hydroxybenzyl)isocyanurate,

(e) n-octadecyl-3-(3,5-di-tert-butyl-4-hydroxyphenyl)propionate,

(f) a nickel salt of a monoethyl ester of bis(3,5-di-tert-butyl-4-hydroxybenzylphosphonic acid),

(g) 2,2-dihydroxy-3,3'-di(α-methylcyclohexyl)-5,5'-dimethyl-diphenylmethane,

(h) 4,4'-thiobis(3-methyl-6-tert-butyl-phenyl),

(i) 1,1,3-tris(2-methyl-4-hydroxy-5-tert-butylphenyl)butane,

(j) tetrakis[methylene-3-(3,5-di-tert-butyl-4-hydroxyphenyl)propionate]methane, and

(k) 4,4'-methylene-bis(2,6-di-tert-butyl-phenol).

The hindered phenols (a) to (k) used in the present invention are compounds known as antioxidants or ultraviolet absorbers.

Investigations of the present inventors have shown that while very many hindered phenols have been known heretofore, only the above-specified compounds (a) to (k) can improve the chlorine water resistance or pressure resistance of poly-1-butene polymer to a fully satisfactory degree and other hindered phenols are useless for this purpose, although no clear reason has yet been assigned to it.

The present invention also provides a resin composition comprising a poly-1-butene polymer and at least one hindered phenol characterized in that the phenol is selected from

(a) 3,5-di-tert-butyl-4-hydroxybenzoates of the following formula

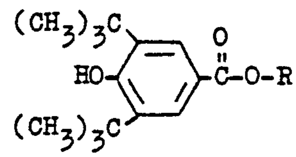

wherein R represents an alkyl group having 1 to 18 carbon atoms or an aryl group having 6 to 18 carbon atoms,

(b) 1,3,5-trimethyl-2,4,6-tris(3,5-di-tert-butyl-4-hydroxybenzyl)benzene,

(c) 1,3,5-tris(4-tert-butyl-3-hydroxy-2,6-dimethylbenzyl)isocyanurate,

(d) 1,3,5-tris(3,5-di-tert-butyl-4-hydroxybenzyl)isocyanurate,

(e) n-octadecyl-3-(3,5-di-tert-butyl-4-hydroxyphenyl)propionate,

(f) a nickel salt of a monoethyl ester of bis(3,5-di-tert-butyl-4-hydroxybenzylphosphonic acid),

(g) 2,2-dihydroxy-3,3'-di(α-methylcyclohexyl)-5,5'-dimethyl-diphenylmethane,

(i) 1,1,3-tris(2-methyl-4-hydroxy-5-tert-butylphenyl)butane,

(k) 4,4'-methylene-bis(2,6-di-tert-butyl-phenol).

with the proviso that if (b) or (e) is present, the composition does not additionally include up to 1% by weight of a water-insoluble magnesium compound having a solubility in water of less than about $1 \times 10^{-3}$% at room temperature.

The specific structures of the hindered phenols (a) to (k) used in this invention are shown below.

(a) 3,5-Di-tert-butyl-4-hydroxybenzoates.

These compounds are represented by the following formula (I).

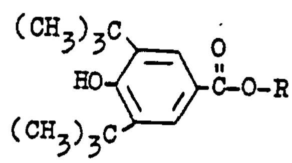

(I)

wherein R represents an alkyl group having 1 to 18 carbon atoms or an aryl group having 6 to 18 carbon atoms.

In formula (I) above, the $C_1$—$C_{18}$ alkyl group may be linear or branched, and includes, for example, methyl, ethyl, propyl, butyl, pentyl, hexyl, heptyl, octyl, nonyl, decyl, undecyl, dodecyl, hexadecyl and octadecyl. Examples of the $C_6$—$C_{18}$ aryl group are phenyl, naphthyl and diphenyl or alkyl-substituted aryl groups resulting from the substitution of the above aryl groups by 1, 2 or 3 alkyl groups having 1 to 12 carbon atoms provided that the total number of carbon atoms in the substituted aryl groups does not exceed 18. Specific examples of the alkyl-substituted aryl groups are 3,5-di-tert-butylphenyl, 2,6-di-tert-butylphenyl, 2,4-di-tert-butylphenyl, 2,4,6-tri-tert-butylphenyl, 2,6-dimethylphenyl, and 2,6-di-tert-butyl-4-methylphenyl.

Thus, examples of the 3,5-di-tert-butyl-4-hydroxybenzoates of formula (I) include methyl 3,5-di-tert-butyl-4-hydroxybenzote, propyl 3,5-di-tert-butyl-4-hydroxybenzoate, octyl 3,5-di-tert-butyl-4-hydroxybenzoate, dodecyl 3,5-di-tert-butyl-4-hydroxybenzoate, hexadecyl, 3,5-di-tert-butyl benzoate, 3,5-di-tert-butylphenyl, 3,5-di-tert-butyl-4-hydroxybenzoate, 2,6-di-tert-butylphenyl, 3,5-di-tert-butyl-4-hydroxybenzoate, 2,4,6-tri-tert-butylphenyl, 3,5-di-tert-butyl-4-hydroxybenzoate, 2,4-di-tert-butylphenyl 3,5-di-tert-butyl-4-hydroxybenzoate, and 2,6-dimethylphenyl 3,5-di-tert-butyl-4-hydroxybenzoate.

(b) 1,3,5-Trimethyl-2,4,6-tris(3,5-di-tert-butyl-4-hydroxybenzyl)benzene

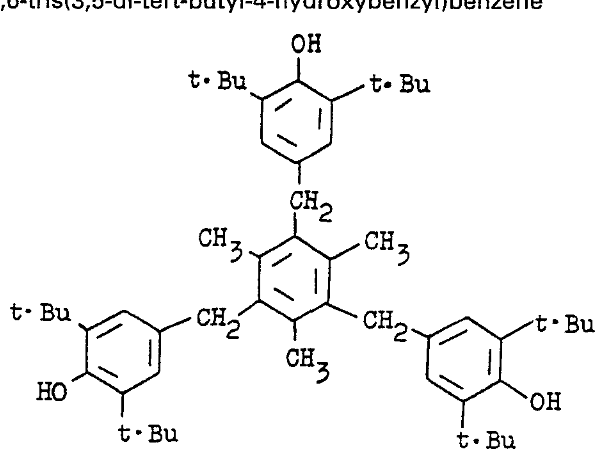

(In the above and subsequent formulae, t·Bu represents a tert-butyl group.

(c) 1,3,5-tris(4-tert-Butyl-3-hydroxy-2,6-dimethylbenzyl)isocyanurate

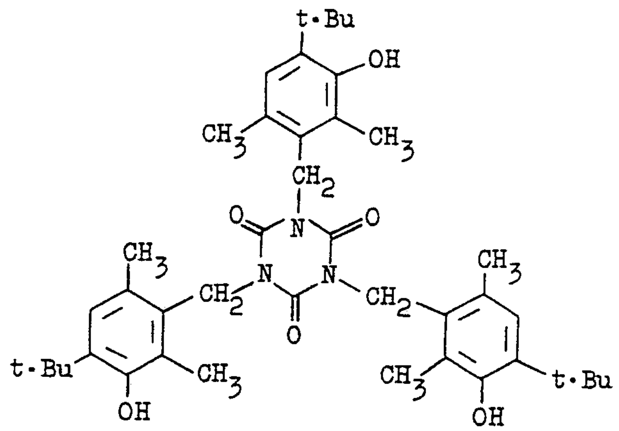

(d) 1,3,5-tris(3,5-Di-tert-butyl-4-hydroxybenzyl)isocyanurate

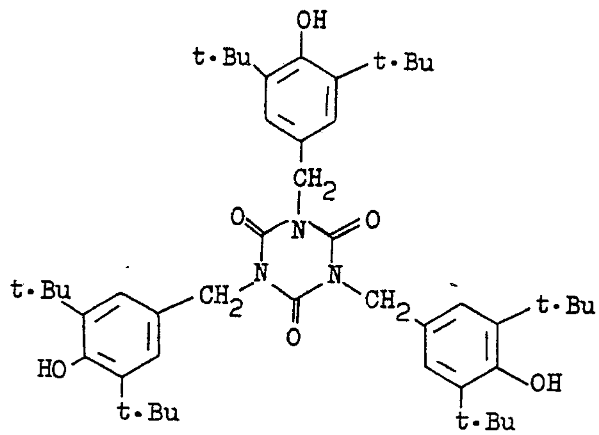

(e) n-Octadecyl 3-(3,5-di-tert-butyl-4-hydroxyphenyl)propionate

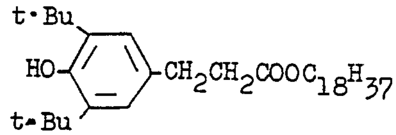

(f) Nickel salt of a monoethylester of bis(3,5-di-tert-butyl-4-hydroxybenzylphosphonic acid)

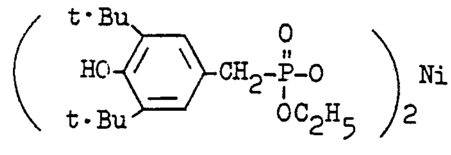

(g) 2,2′-dihydroxy-3,3′-di(α-methylcyclohexyl)-5,5′-dimethyl-diphenylmethane

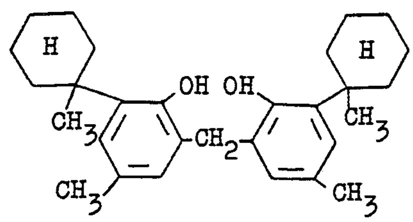

(h) 4,4'-Thiobis(3-methyl-6-tert-butylphenol)

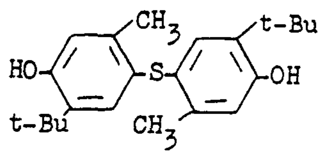

(i) 1,1,3-Tris(2-methyl-4-hydroxy-5-tert-butylphenyl)butane

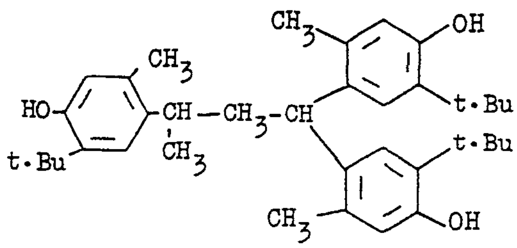

(j) Tetrakis[methylene-3-(3,5-di-tert-butyl-4-hydroxyphenyl)propionate]methane

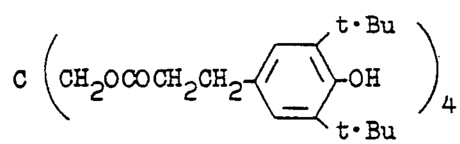

(k) 4,4'-Methylenebis(2,6-di-tert-butylphenol)

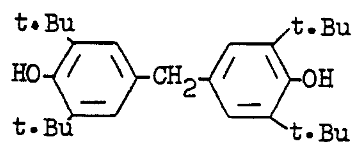

The poly-1-butene polymer used in this invention is preferably a homopolymer of 1-butene, a copolymer of at least 90 mole% of 1-butene and not more than 10 mole% of another α-olefin, or a mixture of at least 50% by weight of the above homopolymer or copolymer with not more than 50% by weight of another α-olefin polymer. Examples of α-olefins other than 1-butene are ethylene, propylene, 4-methyl-1-pentene, 1-hexene and 1-octene. The poly-1-butene polymer used in this invention especially preferably has a melt flow rate (to be abbreviated with MFR) of 0.1 to 50 g/10 minutes (measured in accordance with ASTM D-1238N). The poly-1-butene polymers used in this invention and methods for their manufacture are described, for example, in the specifications of U.S. Patents Nos. 3197452, 3219645, 3362940, 3244685, 3356666, 3907761 and 3865902. The descriptions of these specifications are therefore incorporated herein as part of the specification of the present application.

The poly-1-butene resin composition may contain 100 parts by weight of the poly-1-butene polymer and usually 0.05 to 2.0 parts by weight, preferably 0.1 to 1.0 part by weight, of at least one hindered phenol selected from the group consisting of (a) to (k) above. If the contact of the hindered phenol is lower than the above-specified lower limit, the extent of improvement of the chlorine water resistance of the poly-1-butene resin composition tends to be considerably small.

A group of the hindered phenols (a) to (k) used in this invention give poly-1-butene resin compositions having improved chlorine water resistance and pressure-resistant strength. Investigations of the present inventors have shown the above hindered phenols to be excellent in that the 3,5-di-tert-butyl-4-hydroxybenzoate (a) give the poly-1-butene resin composition which undergoes little degradation at its surface of contact with chlorine water when kept in contact with chlorine water, and the hindered phenols (b) to (k) give the poly-1-butene resin composition which has a relatively high degree of polymerization and little decreases in its degree of polymerization when kept in contact with chlorine water. In Examples given hereinbelow, the degradation of the contacting surface is evaluated by measuring the gloss of the resin surface, and the degree of polymerization, by measuring the solution viscosity of the resin composition.

Preferably, the resin composition contains at least one 3,5-di-tert-butyl-4-hydroxybenzoate (a) and at least one of the hindered phenols (b) to (k).

The resin composition desirably contains at least one of compounds (1) to (n) shown below.

(1) 2,6-di-tert-butyl-p-cresol

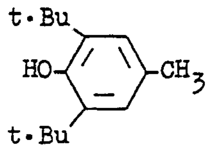

(m) tris(2,4-di-tert-butyl-phenyl)phosphite

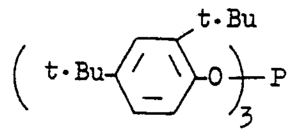

(n) tocopherol(α, β, γ- or δ-tocopherol, or a mixture of these).

The resin composition further containing at least one of the compounds (1) to (n) is superior in that it has a higher degree of polymerization than the resin composition not containing these compounds. The compounds (1) to (n) effectively prevent the poly-1-butene polymer from being degraded in the molten state by oxygen and heat when it is mixed with the hindered phenols (a) to (k). The resin composition which further contains at least one compound from the group of (1) to (n) contains at least one of (1) to (n) in an amount of usually 0.01 to 1.0 part by weight, preferably 0.05 to 0.5 part by weight, per 100 parts by weight of the poly-1-butene polymer. When the content of the compound (1) to (n) is less than 0.01 part by weight, scarcely any effect is obtained of incorporating such a compound (1) to (n). If, on the other hand, it exceeds 1.0 part by weight, there is a tendency to the formation of a resin composition having a reduced tensile yield stress.

The resin composition further containing at least one of the compounds (1) to (n) preferably comprises at least one of the 3,5-di-tert-butyl-4-hydroxybenzoates (a), at least one hindered phenol selected from the group consisting of the compounds (b) to (k) and at least one compound selected from the group of (l) to (n); or the compound (b), the compound (e), the compound (j) and at least one compound selected from the group of (l) to (n).

The aforesaid preferred resin compositions have improved chlorine water resistance both at the surface portion of a shaped article and at the entire porting of a shaped article of resin, and exhibit reduced degradation of the polymer during molding.

Various known methods can be used to mix the poly-1-butene polymer with the compounds (a) to (n). For example, the individual ingredients are mixed by a ribbon blender or a Henschel mixer and then granulated by an extruder. Or they may be directly melted and mixed by a Banbury mixer, a kneader, a two-roll mill, etc. and then granulated by an extruder.

As required, other ultraviolet absorbers, moldproof agents, rust inhibitors, lubricants, fillers, pigments, dyes, heat stabilizers, etc. may be incorporated in the poly-1-butene resin composition. Rust formation on melting and processing machines caused by the catalyst residue can be conveniently inhibited by using as the rust inhibitors a metal salt of a higher fatty acid, or a double compound of the general formula

$$M_xAl_y(OH)_{2x+3y-2z}(A)_z \cdot aH_2O$$

wherein M represents Mg, Ca or Zn, A represents a divalent anion, x, y and z are positive numbers, and a is 0 or a positive number.

Since the resin composition has excellent chlorine water resistance and pressure-resistant strength, it can be conveniently used as a material for pipe systems adapted for supplying water having chlorine dissolved therein, for example tap water, or non-potable industrial water sterilized with chlorine.

A water supply pipe of the present invention may be molded from the poly-1-butene resin composition of this invention by, for example, melting the poly-1-butene polymer having incorporated therein at least one compound selected from (a) to (n) at a temperature of 150 to 300°C in an extruder, extruding the molten mixture through a die, sizing the extrudate, cooling the extrudate with cooling water at a temperature of 5 to 50°C, and cutting or winding up the cooled product through a take-up device. The extruder may generally be a single-screw metering type extruder. The die may, for example, be of a straight head type, a cross head type or an offset type. The sizing may be carried out by a sizing plate method, an outside mandrel method, a sizing box method or an inside mandrel method. A pipe coupling joint may be molded by using a combination of an ordinary injection molding machine and a mold or a combination of a blow molding machine and a mold, and a hot water storage tank may be molded by using a combination of a blow molding machine and a mold.

The poly-1-butene resin composition can be used widely in cold and hot water supply systems because it has improved chlorine water resistance while retaining superior pressure-resistant strength, internal pressure creep durability at high temperatures, high and low temperature properties and abrasive resistance inherent to the poly-1-butene polymer.

The following examples illustrate the present invention in greater detail.

Example 1

One hundred parts by weight of poly-1-butene (MFR 0.8 g/10 min.; ASTM D-1238N); manufactured by Mitsui Petrochemical Industries, Ltd.), 0.15 part by weight of calcium stearate, 0.05 part by weight of synthetic hydrotalcite (DHT-4A, a tradename) and 0.4 part by weight of each of the compounds shown in Table 1 were mixed in a Henschel mixer, melted and extruder at 230°C and then granulated by an extruder having a screw diameter of 20 mm. The resulting pellets were melted for 10 minutes by a hot press at 200°C, and then pressed by a cold press at 30°C for 3 minutes to form a press sheet having a thickness of 1 mm. Test pieces, 10 mm × 150 mm in size, were cut off from the press sheet. Each test piece was set on a holder, and dipped in a vessel in which chlorine containing water having an effective chlorine concentration of 100 ppm and a temperaturer of 90°C was passed at a rate of 1 liter/hour. The gloss (angle of incident light 45°) and [η] (in decalin at 135°C) of each test piece with the lapse of time were measured.

Immediately after molding, all test pieces had a gloss in the range of 90 to 95%. The results are summarized in Table 1.

TABLE 1

| Run No. | Compound incorporated | Gloss (%) | | [η] (dl/g) | |
|---|---|---|---|---|---|
| | | In the 4th week | In the 8th week | Initial value | In the 8th week |
| 1 | (a)-1 | 85 | 76 | 3.2 | 1.7 |
| 2 | (a)–2 | 80 | 70 | 3.1 | 1.5 |
| 3 | (b) | 35 | 6 | 4.2 | 3.2 |
| 4 | (c) | 30 | 5 | 4.5 | 3.6 |
| 5 | (d) | 25 | 6 | 3.8 | 2.9 |
| 6 | (e) | 29 | 6 | 4.1 | 3.0 |
| 7 | (f) | 76 | 8 | 4.6 | 3.6 |
| 8 | (g) | 23 | 5 | 4.6 | 3.5 |
| 9 | (h) | 23 | 6 | 4.2 | 3.4 |
| 10 | (i) | 60 | 6 | 3.7 | 2.9 |
| 11 | (j) | 9 | 5 | 4.3 | 2.8 |
| 12 | (k) | 45 | 12 | 4.7 | 1.0 |
| 13 | (l) | 57 | 25 | 4.6 | 3.4 |
| 14 | (m) | 25 | 5 | 4.6 | 0.8 |
| 15 | (n) | 70 | 10 | 4.5 | 1.0 |

In the table, compound (a)-1 is 2,4-di-tert-butylphenyl 3,5-di-tert-butyl-4-hydroxybenzoate, and compound (a)-2 is n-hexadecyl-3,5-di-tert-butyl-4-hydroxybenzoate.

The compounds used in the above experiments were all commercially available compounds which are shown by tradenames as follows:

| | |
|---|---|
| (a)-1: | Tinuvin 120 |
| (a)-2: | Cyasorb UV-2908 |
| (b): | Irganox 1330 |
| (c): | Syanox 1790 |
| (d): | Goodrite 3114 |
| (e): | Irganox 1076 |
| (f) | Irgastab 2002 |
| (g): | Nonox WSP |
| (h): | Santonox R |
| (i): | Topanol CA |
| (j): | Irganox 1010 |
| (k): | Antioxidant 702 |
| (l): | BHT |
| (m): | Irgaphos 168 |
| (n): | vitamin E |

Comparative Examples 1 to 5

Example 1 was repeated except that each of the compounds indicated in Table 2 was used instead of each of the compounds indicated in Table 1. The results are shown in Table 2.

TABLE 2

| Comparative Example | Compound incorporated | Gloss (%) | | [η] (dl/g) | |
|---|---|---|---|---|---|
| | | In the 4th week | In the 8th week | Initial value | In the 8th week |
| 1 | Not added | 7 | 5 | 1.9 | 0.4 |
| 2 | p | 6 | 5 | 2.8 | 0.6 |
| 3 | q | 8 | 5 | 2.6 | 0.7 |
| 4 | r | 6 | 5 | 3.3 | 0.6 |
| 5 | s | 6 | 5 | 3.7 | 1.6 |

Note: p: 2-(2-hydroxy-3-tert-butyl-5-methylphenyl)-5-chlorobenzotriazole
q: bis(2,2,6,6-tetramethyl-4-piperidyl)sebacate
r: distearyl thiodipropionate
s: pentaerythritol tetra(β-laurylthiopropionate)

Examples 2 to 4

Example 1 was repeated except that 0.2 part by weight of each of the compounds indicated in Table 3 was used instead of 0.4 part by weight of each of the compounds indicated in Table 1. The results are shown in Table 3.

TABLE 3

| Example | Compound incorporated | Gloss (%) | | [η] (d/lg) | |
|---|---|---|---|---|---|
| | | In the 4th week | In the 8th week | Initial value | In the 8th week |
| 2 | (a)-1 and (b) | 90 | 81 | 4.0 | 3.0 |
| 3 | (a)-2 and (c) | 90 | 80 | 4.2 | 3.1 |
| 4 | (b) and (k) | 89 | 35 | 4.6 | 3.5 |

The compounds indicated in Table 3 were commercially available under the tradenames shown below Table 1.

Examples 5 to 9

Example 1 was repeated except that 0.2 part by weight of each of the compounds indicated in Table 4 was used instead of 0.4 part by weight of each of the compounds indicated in Table 1. The results are shown in Table 4.

TABLE 4

| Example | Compound incorporated | Gloss (%) | | [η] (dl/g) | |
|---|---|---|---|---|---|
| | | In the 4th week | In the 8th week | Initial value | In the 8th week |
| 5 | (a)-1, (f) and (m) | 90 | 90 | 4.8 | 4.4 |
| 6 | (a)-1, (b) and (k) | 90 | 90 | 4.7 | 4.3 |
| 7 | (a)-1, (b) and (n) | 90 | 90 | 4.7 | 4.3 |
| 8 | (a)-1, (b) and (m) | 90 | 90 | 4.9 | 4.5 |
| 9 | (a)-1, (b) and (l) | 90 | 90 | 4.8 | 4.2 |

The compounds indicated in Table 4 were commercially available under the tradenames indicated below Table 1.

Example 10

Example 1 was repeated except that the four compounds indicated in Table 5 were used in the indicated amounts instead of 0.4 part by weight of each of the compounds shown in Table 1. The results are shown in Table 5.

TABLE 5

| Compounds (parts by weight) | Gloss (%) | | [η] (dl/g) | |
|---|---|---|---|---|
| | In the 4th week | In the 8th week | Initial value | In the 8th week |
| (b) (0.3)<br>(e) (0.3)<br>(j) (0.3)<br>(l) (0.1) | 85 | 65 | 4.6 | 4.4 |

**Claims**

1. A cold or hot water pipe comprising a resin composition comprising a poly-1-butene polymer and at least one hindered phenol selected from

(a) 3,5-di-tert-butyl-4-hydroxybenzoates of the following formula

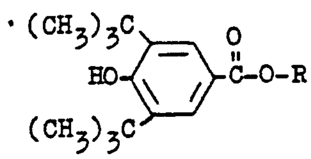

wherein R represents an alkyl group having 1 to 18 carbon atoms or an aryl group having 6 to 18 carbon atoms,

(b) 1,3,5-trimethyl-2,4,6-tris(3,5-di-tert-butyl-4-hydroxybenzyl)benzene,
(c) 1,3,5-tris(4-tert-butyl-3-hydroxy-2,6-dimethylbenzyl)isocyanurate,
(d) 1,3,5-tris(3,5-di-tert-butyl-4-hydroxybenzyl)isocyanurate,
(e) n-octadecyl-3-(3,5-di-tert-butyl-4-hydroxyphenyl)propionate,
(f) a nickel salt of a monoethyl ester of bis(3,5-di-tert-butyl-4-hydroxybenzylphosphonic acid),
(g) 2,2′-dihydroxy-3,3′-di(α-methylcyclohexyl)-5,5′-dimethyl-diphenylmethane,
(h) 4,4′-thiobis(3-methyl-6-tert-butyl-phenol),
(i) 1,1,3-tris(2-methyl-4-hydroxy-5-tert-butylphenyl)butane,
(j) tetrakis[methylene-3-(3,5-di-tert-butyl-4-hydroxyphenyl)propionate]methane, and
(k) 4,4′-methylene-bis(2,6-di-tert-butyl-phenol).

2. A pipe according to claim 1 wherein the resin composition further comprises at least one compound selected from

(l) 2,6-tert-butyl-p-cresol,
(m) tris(2,4-di-tert-butyl-phenyl)phosphite, and
(n) tocopherol.

3. A pipe according to claim 2 which comprises at least one of the 3,5-di-tert-butyl-4-hydroxybenzoates (a), at least one hindered phenol selected from (b) to (k), and at least one compound selected from (l) to (n).

4. A pipe according to claim 3 which comprises the compound (b), the compound (e), the compound (j), and at least one compound selected from (l) to (n).

5. A pipe according to any one of the preceding claims wherein the poly-1-butene polymer is a homopolymer of 1-butene, a copolymer of at least 90 mole% of 1-butene and not more than 10 mole% of another α-olefin, or a mixture of at least 50% by weight of said homopolymer or copolymer with not more than 50% by weight of another α-olefin.

6. A pipe according to any one of the preceding claims which comprises 0.05 to 2.0 parts by weight of at least one hindered phenol selected from (a) to (k) per 100 parts by weight of the poly-1-butene polymer.

7. A pipe according to any one of claims 2 to 6 which comprises 0.01 to 1.0 part by weight of at least one compound selected from (l) to (n) per 100 parts by weight of the poly-1-butene polymer.

8. A pipe according to any one of the preceding claims which comprises 0.05 to 2.0 parts by weight of at least one compound (a) per 100 parts by weight of the poly-1-butene polymer.

9. A resin composition comprising a poly-1-butene polymer and at least one hindered phenol characterized in that the phenol is selected from

(a) 3,5-di-tert-butyl-4-hydroxybenzoates of the following formula

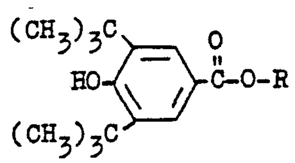

wherein R represents an alkyl group having 1 to 18 carbon atoms or an aryl group having 6 to 18 carbon atoms,

(b) 1,3,5-trimethyl-2,4,6-tris(3,5-di-tert-butyl-4-hydroxybenzyl)benzene,
(c) 1,3,5-tris(4-tert-butyl-3-hydroxy-2,6-dimethylbenzyl)isocyanurate,
(d) 1,3,5-tris(3,5-di-tert-butyl-4-hydroxybenzyl)isocyanurate,
(e) n-octadecyl-3-(3,5-di-tert-butyl-4-hydroxyphenyl)propionate,
(f) a nickel salt of a monoethyl ester of bis(3,5-di-tert-butyl-4-hydroxybenzylphosphonic acid),
(g) 2,2-dihydroxy-3,3′-di(α-methylcyclohexyl)-5,5′-di-methyl-diphenylmethane,
(i) 1,1,3-tris(2-methyl-4-hydroxy-5-tert-butylphenyl)butane,
(k) 4,4′-methylene-bis(2,6-di-tert-butyl-phenol),

with the proviso that if (b) or (e) is present, the composition does not additionally include up to 1% by weight of a water-insoluble magnesium compound having a solubility in water of less than about 1 × $10^{-3}$% at room temperature.

## Patentansprüche

1. Rohr für kaltes oder heißes Wasser, umfassend eine Harzmasse, bestehend aus einem Poly-1-buten-Polymer und mindestens einem sterisch gehinderten Phenol, ausgewählt aus:

(a) 3,5-Di-tert-butyl-4-hydroxybenzoaten der folgenden Formel

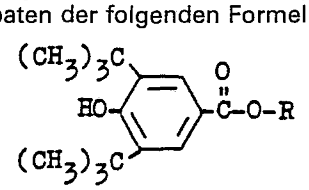

in der R eine Alkylgruppe mit 1 bis 18 Kohlenstoffatomen oder eine Arylgruppe mit 6 bis 18 Kohlenstoffatomen ist;

(b) 1,3,5-Trimethyl-2,4,6-tris(3,5-di-tert-butyl-4-hydroxybenzyl)benzol,

(c) 1,3,5-Tris(4-tert-butyl-3-hydroxy-2,6-dimethylbenzyl)isocyanurat,

(d) 1,3,5-Tris(3,5-di-tert-butyl-4-hydroxybenzyl)isocyanurat,

(e) n-Octadecyl-3-(3,5-di-tert-butyl-4-hydroxyphenyl)propionat,

(f) einem Nickelsalz von einem Monoethylester von Bis(3,5-di-tert-butyl-4-hydroxybenzylphosphonsäure),

(g) 2,2'-Dihydroxy-3,3'-di(α-methylcyclohexyl)-5,5'-dimethyldiphenylmethan,

(h) 4,4'-Thiobis(3-methyl-6-tert-butyl-phenol),

(i) 1,1,3-Tris(2-methyl-4-hydroxy-5-tert-butylphenyl)butan,

(j) Tetrakis[methylen-3-(3,5-di-tert-butyl-4-hydroxyphenyl)propionat]methan und

(k) 4,4'-Methylen-bis(2,6-di-tert-butyl-phenol).

2. Rohr nach Anspruch 1, wobei die Harzmasse ferner mindestens eine Verbindung enthält, ausgewählt aus:

(l) 2,6-tert-Butyl-p-kresol,

(m) Tris(2,4-di-tert-butyl-phenyl)phosphit und

(n) Tocopherol.

3. Rohr nach Anspruch 2, umfassend mindestens eines der 3,5-Di-tert-butyl-4-hydroxybenzoate (a), mindestens ein sterisch gehindertes Phenol, ausgewählt aus (b) bis (k), und mindestens eine Verbindung, ausgewählt aus (l) bis (n).

4. Rohr nach Anspruch 3, umfassend die Verbindung (b), die Verbindung (e), die Verbindung (j) und mindestens eine Verbindung, ausgewählt aus (l) bis (n).

5. Rohr nach einem der vorangehenden Ansprüche, wobei das Poly-1-buten-Polymer ein Homopolymer aus 1-Buten, ein Copolymer aus mindestens 90 mol% Buten und nicht mehr 10 mol% eines anderen α-Olefins oder ein Gemisch aus mindestens 50 Gewichtsteilen des erwähnten Homopolymers oder Copolymers mit nicht mehr als 50 Gewichtsteilen eines anderen α-Olefins ist.

6. Rohr nach einem der vorangehenden Ansprüche, umfassend 0,05 bis 2,0 Gewichtsteile mindestens eines sterisch gehinderten Phenols, ausgewählt aus (a) bis (k) auf 100 Gewichtsteile des Poly-1-buten-Polymers.

7. Rohr nach einem der Ansprüche 2 bis 6, umfassend 0,01 bis 1,0 Gewichtsteile mindestens einer Verbindung, ausgewählt aus (l) bis (n) auf 100 Gewichtsteile des Poly-1-buten-Polymers.

8. Rohr nach einem der vorangehenden Ansprüche, umfassend 0,05 bis 2,0 Gewichtsteile mindestens einer Verbindung (a) auf 100 Gewichtsteile des Poly-1-buten-Polymers.

9. Harzmasse, umfassend Poly-1-buten-Polymer und mindestens ein sterisch gehindertes Phenol, dadurch gekennzeichnet, daß das Phenol ausgewählt ist aus:

(a) 3,5-Di-tert-butyl-4-hydroxybenzoaten der folgenden Formel

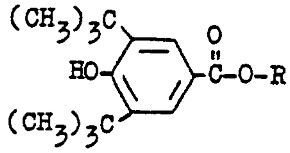

in der R eine Alkylgruppe mit 1 bis 18 Kohlenstoffatomen oder eine Arylgruppe mit 6 bis 18 Kohlenstoffatomen ist;

(b) 1,3,5-Trimethyl-2,4,6-tris(3,5-di-tert-butyl-4-hydroxybenzyl)benzol,

(c) 1,3,5-Tris(4-tert-butyl-3-hydroxy-2,6-dimethylbenzyl)isocyanurat,

(d) 1,3,5-Tris(3,5-di-tert-butyl-4-hydroxybenzyl)isocyanurat,

(e) n-Octadecyl-3-(3,5-di-tert-butyl-4-hydroxyphenyl)propionat,

(f) einem Nickelsalz von einem Monoethylester von Bis(3,5-di-tert-butyl-4-hydroxybenzylphosphonsäure),

(g) 2,2'-Dihydroxy-3,3'-di(α-methylcyclohexyl)-5,5'-dimethyldiphenylmethan,

(h) 4,4'-Thiobis(3-methyl-6-tert-butyl-phenol),

(i) 1,1,3-Tris(2-methyl-4-hydroxy-5-tert-butylphenyl)butan,

(j) Tetrakis[methylen-3-(3,5-di-tert-butyl-4-hydroxyphenyl)propionat]methan und

(k) 4,4'-Methylen-bis(2,6-di-tert-butyl-phenol),

mit der Maßgabe, daß, wenn (b) oder (e) vorhanden ist, die Masse nicht zusätzlich bis zu 1 Gew.-% einer wasserunlöslichen Magnesiumverbindung mit einer Wasserlöslichkeit von weniger als etwa $1 \times 10^{-3}$% bei Raumtemperatur enthält.

**Revendications**

1. Tuyau pour eau froide ou chaude comprenant une composition de résine qui comprend un polymère de poly(1-butène) et au moins un phénol stériquement encombré choisi parmi

(a) les 3,5-di-tert-butyl-4-hydroxybenzoates répondant à la formule suivante:

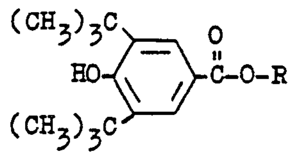

dans laquelle R représente un groupe alkyle ayant de 1 à 18 atomes de carbone ou un groupe aryle ayant de 6 à 18 atomes de carbone,

(b) le 1,3,5-triméthyl-2,4,6-tris(3,5-di-tert-butyl-4-hydroxybenzyl)benzène,

(c) le 1,3,5-tris(4-tert-butyl-3-hydroxy-2,6-diméthylbenzyl)isocyanurate,

(d) le 1,3,5-tris(3,5-di-tert-butyl-4-hydroxybenzyl)isocyanurate,

(e) le 3-(3,5-di-tert-butyl-4-hydroxyphényl)propionate de n-octadécyle,

(f) un sel de nickel d'un ester monoéthylique de l'acide bis(3,5-di-tert-butyl-4-hydroxybenzylphosphonique),

(g) le 2,2'-dihyhdroxy-3,3'-di(α-méthylcyclohexyl)-5,5'-diméthyl-diphénylméthane,

(h) le 4,4'-thio-bis(3-méthyl-6-tert-butyl-phénol),

(i) le 1,1,3-tris(2-méthyl-4-hydroxy-5-tert-butylphényl) butane,

(j) le tétrakis)méthylène-3-(3,5-di-tert-butyl-4-hydroxyphényl)propionate)méthane, et

(k) le 4,4'-méthylène-bis-(2,6-di-tert-butyl-phénol).

2. Tuyau selon la revendication 1, dans lequel la composition de résine comprend en outre au moins un composé choisi parmi

(l) le 2,6-tert-butyl-p-crésol,

(m) le tris(2,4-di-tert-butyl-phényl)phosphite, et

(n) le tocophérol.

3. Tuyau selon la revendication 2, qui comprend au moins un des 3,5-di-tert-butyl-4-hydroxybenzoates (a), au moins un phénol stériquement encombré choisi parmi (b) à (k), et au moins un composé choisi parmi (l) à (n).

4. Tuyau selon la revendication 3, qui comprend le composé (b), le composé (e), le composé (j) et au moins un composé choisi parmi (l) à (n).

5. Tuyau selon l'une quelconque des revendications précédentes, dans lequel le polymère de poly(1-butène) est un homopolymère de 1-butene, un copolymère d'au moins 90% en moles de 1-butène et de pas plus de 10% en moles d'une autre α-oléfine, ou un mélange d'au moins 50% en poids dudit homopolymère ou dudit copolymère avec pas plus de 50% en poids d'une autre α-oléfine.

6. Tuyau selon l'une quelconque des revendications précédentes, qui comprend de 0,05 à 2,0 parties en poids d'au moins un phénol stériquement encombré choisi parmi (a) à (k) pour 100 parties en poids du polymère de poly(1-butène).

7. Tuyau selon l'une quelconque des revendications 2 à 6, qui comprend de 0,01 à 1,0 partie en poids d'au moins un composé choisi parmi (l) à (n) pour 100 parties en poids du polymère de poly(1-butène).

8. Tuyau selon l'une quelconque des revendications précédentes, qui comprend de 0,05 à 2,0 parties en poids d'au moins un composé (a) pour 100 parties en poids du polymère de poly(1-butène).

9. Composition de résine comprenant un polymère de poly(1-butène) et au moins un phénol stériquement encombré, caractérisée en ce que le phénol est choisi parmi.

(a) les 3,5-di-tert-butyl-4-hydroxybenzoates répondant à la formule suivante:

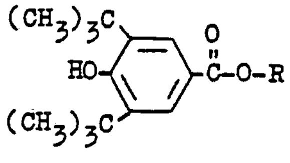

dans laquelle R représente un groupe alkyle ayant de 1 à 18 atomes de carbone ou un groupe aryle ayant de 6 à 18 atomes de carbone,

(b) le 1,3,5-triméthyl-2,4,6-tris(3,5-di-tert-butyl-4-hydroxybenzyl)benzène,

(c) le 1,3,5-tris(4-tert-butyl-3-hydroxy-2,6-diméthylbenzyl)isocyanurate,

(d) le 1,3,5-tris(3,5-di-tert-butyl-4-hydroxybenzyl)isocyanurate,

(e) le 3-(3,5-di-tert-butyl-4-hydroxyphényl)propionate de n-octadécyle,

(f) un sel de nickel d'un ester monoéthylique de l'acide bis(3,5-di-tert-butyl-4-hydroxybenzylphosphonique),

(g) le 2,2'-dihyhdroxy-3,3'-di(α-méthylcyclohexyl)-5,5'-diméthyl-diphénylméthane,

(i) le 1,1,3-tris(2-méthyl-4-hydroxy-5-tert-butylphényl) butane,

(k) le 4,4'-méthylène-bis-(2,6-di-tert-butyl-phénol),

à la condition que si (b) ou (e) sont présents, la composition ne comprenne pas en outre jusqu'à 1% en poids d'un composé du magnésium, insoluble dans l'eau ayant une solubilité dans l'eau inférieure à environ 1 × $10^{-3}$% à la température ambiante.